Europäisches Patentamt

European Patent Office

Office européen des brevets

(11) Numéro de publication: **0 322 059 B1**

(12) **FASCICULE DE BREVET EUROPEEN**

(45) Date de publication de fascicule du brevet: **05.08.92**  (51) Int. Cl.⁵: **H04K 1/00,** H04N 7/167

(21) Numéro de dépôt: **88202939.0**

(22) Date de dépôt: **19.12.88**

---

(54) **Procédé et système de brouillage/désembrouillage du son.**

---

(30) Priorité: **23.12.87 FR 8718045**

(43) Date de publication de la demande:
**28.06.89 Bulletin 89/26**

(45) Mention de la délivrance du brevet:
**05.08.92 Bulletin 92/32**

(84) Etats contractants désignés:
**BE DE FR GB IT**

(56) Documents cités:
**EP-A- 0 042 587**
**FR-A- 2 358 784**
**GB-A- 842 101**
**US-A- 4 581 765**

(73) Titulaire: **PHILIPS ELECTRONIOUE GRAND PU-
BLIC
51, Rue Carnot
F-92150 Suresnes(FR)**

(84) Etats contractants désignés:
**FR**

(73) Titulaire: **N.V. Philips' Gloeilampenfabrieken
Groenewoudseweg 1
NL-5621 BA Eindhoven(NL)**

(84) Etats contractants désignés:
**BE DE GB IT**

(72) Inventeur: **Caprarese, Vincent Societe Civile
S.P.I.D.
209, rue de l'Université
F-75007 Paris(FR)**
Inventeur: **Goguillon, Didier Societe Civile
S.P.I.D.
209, rue de l'Université
F-75007 Paris(FR)**

(74) Mandataire: **Caron, Jean et al
Société Civile S.P.I.D. 156, Boulevard Haussmann
F-75008 Paris(FR)**

---

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

L'invention concerne un procédé pour brouiller un signal de son amené à une voie de transmission, en prévoyant plusieurs modes d'altération du signal de son, le passage d'un mode à l'autre étant déclenché par un signal de commande, et un système de brouillage/désembrouillage du son, comprenant notamment une source de signal de son, un émetteur utilisant une voie de transmission, et des récepteurs, avec à l'émetteur un dispositif capable d'altérer de plusieurs manières le signal de son de façon qu'un récepteur non adapté reproduise un son inintelligible.

L'embrouillage du son est un procédé utilisé notamment dans des systèmes de radiodiffusion ou de télédiffusion dans le but de réserver la réception à un auditoire sélectionné.

Un procédé d'embrouillage du son dans un système de télévision est connu du document GB-A-842 101. Selon ce procédé, le signal de son est mélangé avec une fréquence hétérodyne. Plusieurs oscillateurs hétérodynes sont prévus, entre lesquels on peut choisir. Des impulsions sont fournies de temps en temps en synchronisme avec un retour de ligne, pour commander le passage d'une fréquence hétérodyne à une autre.

Ce procédé présente l'inconvénient que les changements de mode risquent d'entraîner des claquements dans le son, puisqu'il n'y a pas de corrélation entre le son et les instants de changement de mode. En outre, seul un nombre limité de fréquences peut être obtenu, puisqu'il est prévu un oscillateur par fréquence, ce qui procure une protection limitée du secret.

L'invention se propose de fournir un procédé et un système avec lesquels on n'ait pas de claquements lors des changements de mode, et qui procurent un haut degré de protection en offrant la possibilité d'utiliser un grand nombre de modes différents.

L'idée de départ sur laquelle repose l'invention est de provoquer un changement de mode d'embrouillage seulement pendant des silences du signal de son. Mais ceci pose un problème : lorsqu'on détecte un silence, on ne sait pas combien de temps il va durer, et il ne faut pas que le changement risque d'être déclenché au moment où le signal de son reprend. Ce problème est résolu par le procédé selon l'invention qui est remarquable en ce que :- on détecte des périodes où l'amplitude du son, pendant une durée déterminée, reste toujours inférieure à une valeur de référence,

- on engendre, lorsqu'on détecte une telle période, le signal de commande,
- on transmet le son en retard par rapport au son initialement amené et par rapport au signal de commande.

Au lieu d'introduire un retard entre le son transmis et le son initial, on peut aussi provoquer artificiellement une coupure du son pendant une courte durée qui prolonge la susdite période, de manière à ce que le changement de mode ne puisse provoquer un claquement. Une telle coupure n'est pas audible du fait de sa faible durée et surtout du fait qu'elle ne coupe pas le son, puisqu'elle intervient à l'issue d'une période de silence, en la prolongeant. On peut aussi introduire un retard et en plus provoquer cette coupure du son.

Dans le cas où la voie de transmission fait partie d'un canal de télévision, la recherche desdites périodes est avantageusement faite une fois par trame d'image, et le signal de commande est transmis par la voie vidéo.

Un mode d'altération facile à mettre en oeuvre et couramment utilisé consiste à moduler le son en bande de base par un signal modulant dont la fréquence est telle que le signal modulé soit situé dans la bande de fréquences transmise. Dans ce cas on peut obtenir un nombre élevé de modes différents, chacun d'eux correspondant à une fréquence différente du signal modulant, parmi une pluralité de fréquences déterminées, des changements de cette fréquence étant avantageusement commandés par le signal de commande de l'invention.

Un système pour mettre en oeuvre le procédé selon l'invention est remarquable en ce que l'émetteur comporte :

* des moyens comparateurs pour comparer l'amplitude du son avec un niveau de référence,
* des moyens de scrutation du signal de sortie des moyens comparateurs pendant une durée déterminée, qui engendrent un signal de commande transmis sur la voie de transmission et également fourni à un processeur qui détermine une valeur numérique de commande indiquant de quelle manière le signal de son doit être altéré, et
* des moyens qui retardent, sur la voie de transmission, le signal de son par rapport audit signal de commande.

Dans le cas où le dispositif capable d'altérer le signal de son est un dispositif de modulation comprenant un générateur de signal modulant à une fréquence telle que le signal modulé soit situé dans la bande de fréquences transmises, le générateur de signal modulant est programmable en fréquence, et la valeur de commande issue du processeur est une valeur de commande de la fréquence du générateur de signal modulant.

Ce générateur est avantageusement un oscillateur à boucle de verrouillage de phase, et la valeur de commande issue du processeur est une valeur numérique qui programme un diviseur du générateur.

Dans le cas où les temps de transit dans la voie d'émission sont mal connus, il est avantageux de munir le système d'un dispositif de silence, capable de couper le son sur commande et d'activer ce dispositif pendant une courte durée immédiatement après l'apparition du signal de commande. Dans ce cas l'existence d'un retard peut éventuellement être superflue.

Des récepteurs selon l'invention sont équipés de moyens pour exploiter le signal de commande transmis et ajuster le mode de décodage en conséquence de façon à retrouver le son initial. Dans le cas ou l'altération du son consiste en une modulation avec un signal modulant, le récepteur comprend un modulateur du signal de son et un générateur de signal modulant, lequel selon l'invention est programmable en fréquence, et le récepteur comporte des moyens de détection du signal de commande et un processeur pour calculer sous la commande du signal de commande un signal de détermination de la fréquence du générateur de signal modulant.

La description qui va suivre, en regard des dessins annexés décrivant des exemples non limitatifs fera bien comprendre comment l'invention peut être réalisée.

La figure 1 est un diagramme du temps pour illustrer le procédé.

La figure 2 représente schématiquement un émetteur selon l'invention.

La figure 3 représente schématiquement une partie d'un récepteur selon l'invention.

L'exemple de mise en oeuvre du procédé selon l'invention qui va être décrit s'applique au brouillage d'un signal sonore dans un système de télévision, qui comporte notamment une source de signal sonore, un émetteur utilisant une voie de transmission hertzienne, et des récepteurs. Le procédé est étudié notamment pour que l'essentiel des circuits nécessaires soit situé à l'émetteur, de façon à simplifier la réalisation des récepteurs.

L'émetteur comporte un dispositif capable de brouiller l'image, qui ne fait pas partie de la présente invention, et un dispositif capable d'altérer de plusieurs manières le signal de son. On entend par là que la manière d'altérer le signal n'est pas fixée une fois pour toutes, mais au contraire peut varier au cours du temps. Ces variations ne sont pas continues mais consistent en des passages quasi instantanés d'un mode de brouillage à un autre, ces passages étant à chaque fois déclenchés par un signal de commande.

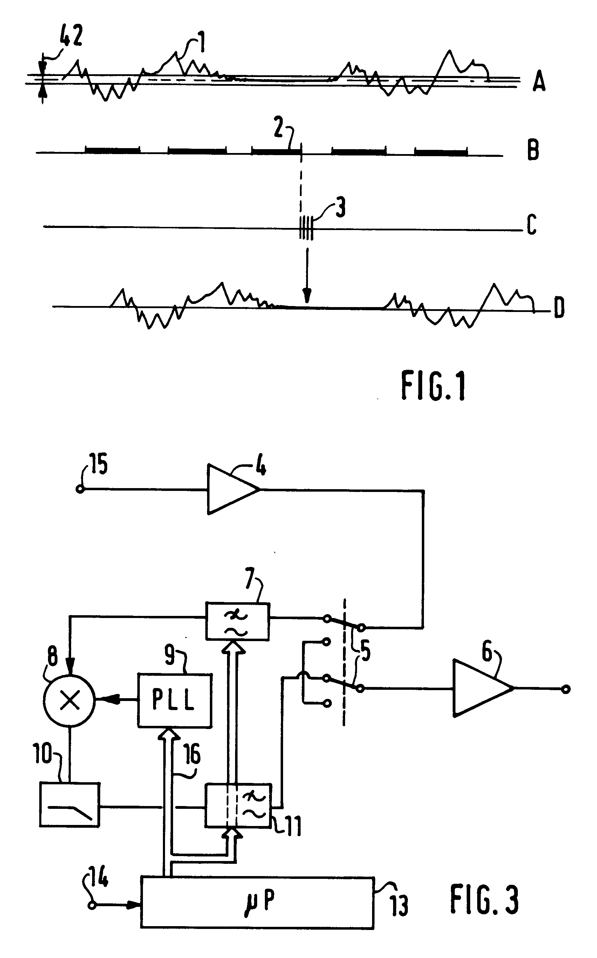

La ligne A sur la figure 1 représente un signal de son en bande de base. La ligne B représente en trait plus épais des durées pendant chacune desquelles on détecte si l'amplitude du son reste toujours inférieure à une valeur de référence. Chacune des durées indiquée est déterminée, par exemple : dix à quinze millisecondes. Pendant toute la durée indiquée par 2, l'amplitude du signal de son est très faible, en tout cas inférieure à une valeur de référence indiquée par la flèche 42, alors que pendant toutes les autres durées représentées, le signal est, au moins à un instant, supérieur à la valeur de référence. A la fin de la période 2, on a donc détecté l'événement recherché et on engendre donc le signal de commande 3 représenté à la ligne C. Ce signal, comme indiqué plus haut, déclenche le passage d'un mode de brouillage à un autre dans l'émetteur. Ce signal est en outre émis à l'instant sur la voie de transmission pour être exploité par les récepteurs. Le signal de son est émis comme représenté à la ligne D. C'est le même signal qu'à la ligne A, mais retardé, avec un retard qui est de l'ordre de grandeur d'une durée de détection indiquée en trait épais à la ligne B. Il apparaît qu'alors, au moment où le signal 3 est transmis, il reste encore une durée notable pendant laquelle le signal de la ligne D représente encore du silence, c'est-à-dire qu'on peut commuter d'un mode d'embrouillage à un autre simultanément à l'émission et à la réception, sans produire de claquements sonores dans les récepteurs. De tels claquements sont en effet provoqués par des produits de non linéarité avec le signal incident, et sont donc nuls si ce signal est nul.

Les périodes de détection successives d'une certaine durée chacune sont par exemple répétées une fois par trame d'image de télévision. Dans d'autres systèmes, on pourrait aussi réaliser aisément une détection permanente, avec émission d'un signal chaque fois qu'une période de silence d'une durée minimale est apparue. Dans le présent exemple, on met à profit la périodicité des durées de détection et leur synchronisme avec la vidéo pour transmettre le signal de commande 3 par la voie vidéo. Ce signal peut par exemple être inséré dans une des lignes du retour de trame, à un moment prédéterminé par rapport aux tops de synchronisation ligne et trame, de façon à pouvoir être détecté facilement dans les récepteurs. Pour permettre la transmission immédiate du signal, les durées de détection sont calées dans le temps de façon à se terminer précisément au moment prévu pour un éventuel signal.

En pratique, les circuits complexes d'un émetteur de télévision introduisent des retards entre le son et l'image, d'où il résulte qu'il est inutile de prévoir spécifiquement un dispositif de retardement tel qu'une ligne à retard : en choisissant de transmettre le signal de commande par la voie vidéo on évite bien entendu de troubler la voie de son ou d'avoir à utiliser des bandes de fréquence différentes pour le signal de son et le signal de commande, comme dans le document cité en préambule, mais en outre on obtient naturellement que le signal de commande est envoyé un peu en avance par rapport au signal de son.

Bien entendu, dans le cas par exemple de transmission de télévision par câble qui ne présenteraient pas naturellement un tel retard, on pourrait prévoir une ligne à retard ou tout autre moyen de retardement volontaire de la transmission du son par rapport à la transmission du signal de commande.

Dans le cas où le retard naturel apporté par l'émission est faible ou non constant, ou bien si la durée d'établissement d'un nouveau mode de brouillage est notable, il peut être avantageux de provoquer une coupure du son pendant une courte durée qui prolonge la période de silence détectée. Cette coupure doit être introduite dans le son sous la commande du signal 3, par exemple en un point du dispositif où le son n'est pas retardé.

Un moyen connu de brouiller le son consiste à l'altérer en le modulant en bande de base par un signal modulant dont la fréquence est telle que le signal modulé soit situé dans la bande de fréquences transmise. C'est ce moyen qui est utilisé par exemple dans le système français connu sous le nom "Canal + ".

Si on utilise un signal modulant à fréquence fixe, un décodage est très facile à mettre en oeuvre par une personne non autorisée. Si par contre on utilise un signal modulant pour lequel plusieurs fréquences prédéterminées sont prévues et dont la fréquence est souvent modifiée, le décodage devient beaucoup plus difficile. Cette modification de fréquence constitue un des procédés possibles permettant d'obtenir plusieurs modes d'altération du signal de son, chacun des modes correspondant ainsi à une des fréquences prédéterminées du signal modulant. Le changement de fréquence du signal modulant est déclenché à chaque fois par le signal de commande 3.

Un exemple d'un mode de mise en oeuvre du procédé selon l'invention va maintenant être décrit.

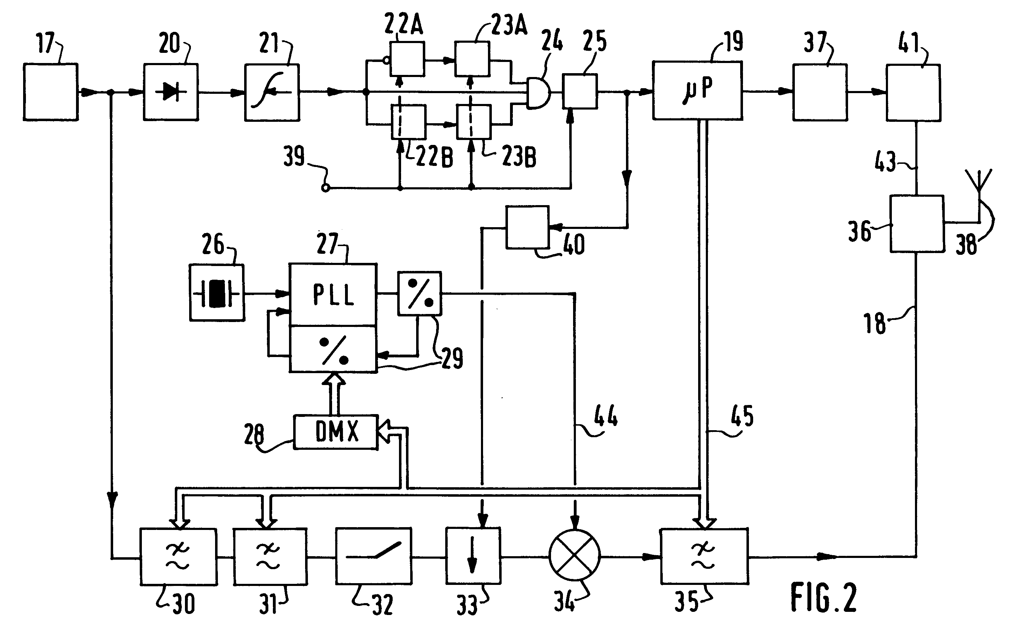

L'émetteur de télévision de la figure 2 comprend une source de signal de son symbolisée par 17, qui peut être un microphone, ou un support enregistré quelconque, avec ses circuits de réglage et de calibrage. Il comporte aussi une source de signal vidéo 41, telle qu'une caméra ou un support enregistré, et un émetteur 36 qui réalise le multiplexage en fréquence des voies vidéo 43 et son 18 pour transmettre le tout par une antenne d'émission 38. Tous ces éléments sont représentés pour situer les circuits de l'invention, mais n'en font pas partie.

Le signal de son est amené à des moyens comparateurs 20, 21 et à l'entrée d'une chaîne de codage 30-35 sur laquelle on reviendra plus loin, et qui fournit sur la connexion 18 le signal destiné à être émis par l'émetteur 36.

Les moyens comparateurs sont constitués d'un circuit de mesure d'amplitude 20, qui est en pratique un redresseur double alternance réalisé à partir d'amplificateurs opérationnels et de diodes, et dont la tension de sortie, qui représente l'amplitude du signal de son, est amenée à un comparateur 21 qui la compare à un niveau de référence, qui est créé facilement au moyen par exemple d'un pont diviseur à partir d'une alimentation régulée, non représentés. Ce niveau de référence correspond à l'amplitude indiquée par la flèche 42 sur la figure 1A. Il correspond en pratique à une période de silence, et n'est pas tout à fait nul parcequ'alors on ne détecterait jamais de silence, à cause du bruit de fond. Un compromis doit être choisi entre un seuil très bas qui serait rarement atteint et un seuil trop haut qui pourrait conduire à des petits claquements au moment des changements de mode de brouillage.

Le signal de sortie de 21 indique donc si l'amplitude du signal de son est plus grande ou plus petite que le niveau de tension de référence. On supposera que, par exemple, ce signal est à zéro en cas de bruit et à 1 en cas de silence. Cette indication est permanente et instantanée. Il faut donc des moyens de scrutation qui surveillent ce signal pendant une durée déterminée. Ces moyens de scrutation sont constitués par les circuits 22 à 25. Le signal de sortie du comparateur 21 est amené à l'entrée de deux circuits monostables 22A et 22B. Chaque sortie de ces circuits 22 est branchée à l'entrée d'un circuit de maintien, ou latch, 23A et 23B. Sur la borne 39 reliée aux circuits 22, 23, 25 est amené un signal dont la durée est celle des portions en trait épais de la figure 1B. Pendant la durée de ce signal les monostables sont validés, c'est-à-dire rendus susceptibles de se déclencher en fonction du signal sortant du comparateur 21. Le circuit référencé 22A se déclenche chaque fois que le signal de sortie du comparateur passe de 0 à 1, alors que l'autre, référencé 22B, se déclenche sur la transition inverse.

La sortie de ces circuits est normalement à 1 et tombe à zéro pendant la durée d'une impulsion, et la durée d'une impulsion est au moins égale à celle d'une durée 2 sur la figure 1B. La fin du signal sur la borne 39 déclenche l'enregistrement des sorties des monostables par les latches 23, et les deux signaux enregistrés sont amenés à deux entrées d'une porte NON/ET 24. Celle-ci possède une troisième entrée qui est reliée directement à la sortie du comparateur 21.

S'il y a eu une transition, dans un sens ou dans l'autre, à la sortie du comparateur, cela veut dire qu'au moins à un instant pendant la durée de validation, il n'y a pas eu silence. Alors l'un ou l'autre des monostables a été déclenché et sa sortie est à zéro à la fin de la durée de scrutation : au moins une des entrées de la porte 24 n'est pas à 1.

Si le signal de son a été toujours supérieur au seuil, sans interruption, pendant la période, il l'est encore à la fin et le signal de sortie du comparateur est à zéro. L'entrée du milieu, sur la figure, de la porte 24 est à zéro.

S'il y a eu silence pendant toute la période, il n'y a pas eu de transition, les sorties des deux monostables sont à 1, et la sortie du comparateur 21 est à 1. On peut imaginer, bien entendu, d'autres organisations équivalentes, par exemple avec des niveaux logiques inverses, conduisant au même résultat. La sortie de la porte 24 est reliée au circuit générateur de signal de commande 25, et permet à ce dernier d'engendrer le signal de commande. Ce signal est transmis à un processeur 19 qui commande un circuit 37 multiplexeur temporel, lequel insère un code dans une ligne de balayage d'image du générateur de signal vidéo 41, pour être émis par l'émetteur 36.

Sous la commande du signal de commande le processeur 19 détermine une valeur numérique de commande indiquant de quelle manière le son doit être altéré et fournit cette valeur sur la connexion multiple 45. Dans l'exemple décrit ici, cette valeur détermine quelle fréquence doit être choisie pour le signal modulant. Cette valeur est déterminée par exemple à partir d'une extension de l'algorithme associant un générateur pseudo-aléatoire, un code transmis et une clef secrète, et qui est utilisé couramment pour le brouillage de l'image, par exemple dans le système de "Canal +". Cet algorithme permet bien entendu à un processeur situé dans les récepteurs de retrouver la même fréquence que celle choisie à l'émission, sous la seule commande du signal de commande transmis : ce signal de commande ne fait que déclencher le changement de fréquence, et c'est le processeur qui décide quelle sera la nouvelle fréquence.

Le dispositif capable d'altérer le signal de son est constitué par les éléments référencés 26 à 35.

Le dispositif de modulation est constitué du modulateur 34 proprement dit et du générateur de signal modulant 26 à 29. Ce dernier est constitué ici d'un oscillateur 27 à boucle de verrouillage de phase dit PLL, piloté par un oscillateur à quartz 26. La fréquence fournie est divisée dans un diviseur 29 dont une partie présente un rapport de division programmable commandé par un démultiplexeur 28 auquel est amenée par la connexion multifils 45 la valeur numérique de commande élaborée par ce processeur 19. La connexion 44 amène le signal modulant au modulateur 34. Avec ce dispositif, on peut obtenir une série de fréquences équidistantes.

Le générateur 26-29 peut fournir par exemple trente deux fréquences équidistantes comprises entre 12,0 kHz et 15,1 kHz. La distance minimale entre deux fréquences possibles est donc de 100 Hz, et un tel écart entre émetteur et récepteur provoque un brouillage suffisant.

On pourrait aussi partir d'un diviseur fixe et diviser sa fréquence dans un rapport variable ; mais la série de fréquences obtenues ne serait pas équidistante.

Le signal de son est amené en cascade à deux filtres successifs 30, 31, un circuit de préaccentuation connu 32, un circuit de silence 33, le modulateur 34, un filtre de sortie 35, et enfin à l'émetteur 36. Chacun des filtres 30, 31, 35 est un filtre à capacités commutées du $7^e$ ordre que l'on trouve dans le commerce en circuit intégré, et dont la fréquence de coupure peut être réglée électriquement par la valeur numérique sur la connexion 45, ou par introduction d'un signal extérieur dont la fréquence commande la fréquence de coupure du filtre.

Dans la présente réalisation, les retards intrinsèques apportés par les circuits au signal de son par rapport au signal vidéo, dans l'émetteur, sont suffisants pour obtenir l'effet recherché, c'est-à-dire le retard entre les lignes D et A de la figure 1. Si ce n'était pas le cas, une ligne à retard pourrait être prévue, par exemple entre le filtre 35 et la voie d'émission. Un autre moyen peut être utilisé, grâce auquel l'existence d'un retard peut devenir superflue : un circuit 40 qui peut être un circuit monostable ou un compteur de lignes est déclenché par le signal de commande issu du générateur 25, et ce circuit 40 détermine une durée pendant laquelle il fournit un signal d'activation au circuit de silence 33, qui coupe le son lorsqu'il est activé. Cette coupure peut durer par exemple de une à deux durées de ligne de balayage d'image.

Le circuit de décodage de la figure 3, situé dans un récepteur du système, par exemple ici un récepteur de télévision, comporte un démodulateur de son, connu et non représenté, qui fournit le signal de son via une borne d'entrée 15 à l'entrée d'un circuit 4 de mise en forme, c'est-à-dire d'ajustage de niveau, de limitation (ou toute autre fonction, sans rapport avec l'invention) dont la sortie est amenée à un double commutateur 5 dont le fonctionnement est facile à comprendre : dans la position représentée qui correspond à un son brouillé, le son passe par un premier filtre passe-bas 7, un modulateur 8, un circuit de désaccentuation 10, et un deuxième filtre passe bas 11, pour arriver enfin à un amplificateur de sortie 6. Dans l'autre position du commutateur 5, qui correspond à un son transmis en clair, le son arrive directement à l'amplificateur 6. Un oscillateur PLL programmable 9 fournit au modulateur 8 un signal modulant. Ce signal doit présenter la même série de fréquences que celles du générateur 27 de l'émetteur. Le signal de commande transmis est détecté dans le signal vidéo par un moyen quelconque, et amené via la borne 14 à un processeur 13 dans lequel il déclenche le même calcul qu'à l'émission, pour déterminer la fréquence dont le résultat est fourni par la connexion 16, sous la forme d'un mot de commande, à l'oscillateur 9. Ce mot a ici cinq bits pour définir 32 fréquences. Il est fourni aussi aux filtres 7 et 11 pour commander leur fréquence de coupure et/ou de réjection. En principe, le son arrivant au filtre 11 est toujours rétabli dans sa bande de base par le modulateur 8, et ce filtre 11 pourrait donc être le même, quelle que soit la fréquence du signal modulant. Mais il comporte une fonction de réjection de la fréquence modulante, qui n'est pas fixe. La valeur issue du processeur commande donc la fréquence de coupure et celle de réjection du filtre 7, et seulement la fréquence de réjection pour le filtre 11.

Le système qui a été décrit ci-dessus concerne un brouillage à plusieurs modes basés sur une fréquence variable pour le signal modulant. Il est bien évident que l'invention s'applique à tous les brouillages à plusieurs modes de brouillage, quels que soient ces modes.

## Revendications

1. Procédé pour brouiller un signal de son amené à une voie de transmission, en prévoyant plusieurs modes d'altération du signal de son, le passage d'un mode à l'autre étant déclenché par un signal de commande, caractérisé en ce que :
   - on détecte des périodes où l'amplitude du son, pendant une durée déterminée, reste toujours inférieure à une valeur de référence,
   - on engendre, lorsqu'on détecte une telle période, le signal de commande,
   - on transmet le son en retard par rapport au son initialement amené et par rapport au signal de commande et/ou on provoque une coupure du son pendant une courte durée qui prolonge ladite période.

2. Procédé selon la revendication 1, utilisé dans un canal de transmission de télévision, caractérisé en ce que l'on procède à la recherche desdites périodes une fois par trame d'image.

3. Procédé selon la revendication 2, caractérisé en ce que l'on transmet ledit signal de commande par la voie vidéo.

4. Procédé selon l'une quelconque des revendications 1 à 3, dans lequel le signal de son est altéré en modulant le son en bande de base par un signal modulant dont la fréquence est telle que le signal modulé soit situé dans la bande de fréquences transmise, caractérisé en ce que le signal de commande provoque un changement de la fréquence du signal modulant parmi une pluralité de fréquences prédéterminées.

5. Système de brouillage/désembrouillage du son, comprenant notamment une source de signal de son, un émetteur utilisant une voie de transmission et des récepteurs, avec à l'émetteur un dispositif capable d'altérer de plusieurs manières le signal de son de façon qu'un récepteur non adapté reproduise un son inintelligible, caractérisé en ce que l'émetteur comporte :
   * des moyens comparateurs pour comparer l'amplitude du son avec un niveau de référence,
   * des moyens de scrutation du signal de sortie des moyens comparateurs pendant une durée déterminée, qui engendrent un signal de commande transmis sur la voie de transmission et également fourni à un processeur qui détermine une valeur numérique de commande indiquant de quelle manière le signal de son doit être altéré, et
   * des moyens qui retardent, sur la voie de transmission, le signal de son par rapport audit signal de commande et/ou un dispositif de silence, capable de couper le son sur commande pendant une courte durée immédiatement après l'apparition du signal de commande.

6. Système selon la revendication 5, dans lequel le dispositif capable d'altérer le signal de son est un dispositif de modulation comprenant un générateur de signal modulant à une fréquence telle que le signal modulé soit situé dans la bande de fréquences transmises, caractérisé en ce que le générateur de signal modulant est programmable en fréquence, et en ce que la valeur de commande issue du processeur est une valeur de commande de la fréquence du générateur de signal modulant.

7. Système selon la revendication 6 caractérisé en ce que le générateur de signal modulant est un oscillateur à boucle de verrouillage de phase, et en ce que la valeur de commande issue du processeur est une valeur numérique qui programme un diviseur du générateur.

8. Système selon l'une des revendications 6 ou 7, muni de filtres passe bas pour le son, placés avant et/ou après le dispositif de modulation, caractérisé en ce que ces filtres sont à fréquence de coupure programmable par une valeur de commande calculée par le processeur en correspondance avec la valeur de commande de la fréquence du générateur.

9. Système selon l'une des revendications 5 à 8, caracterisé en ce que chaque récepteur comporte un dispositif désembrouilleur comprenant un modulateur du signal de son et un générateur de signal molulant, en ce que le générateur de signal modulant est programmable en fréquence, et en ce que chaque récepteur comporte des moyens de détection du signal de commande et un processeur pour calculer sous la commande du signal de commande un signal de détermination de la fréquence du générateur de signal modulant.

10. Système selon la revendication 9 muni de filtres passe-bas pour le son, caractérisé en ce que ces filtres passe-bas sont d'un modèle à fréquence de coupure et/ou de réjection réglable, et en ce que le processeur fournit, sous la commande du signal de commande, un signal de détermination de la fréquence de coupure et/ou de réjection.

## Claims

1. A method of scrambling a sound signal applied to a transmission channel by providing several modes of alteration of the sound signal, the change-over from one mode to the other being triggered by a control signal, characterized in that:
   - periods are detected in which the sound amplitude always remains below a reference value during a given period,
   - the control signal is generated when such a period is detected,
   - the sound is transmitted with a delay with respect to the initially applied sound and with respect to the control signal and/or the sound is cut off during a short period which extends said period.

2. A method as claimed in Claim 1, used in a television transmission channel, characterized in that said periods are searched once per field.

3. A method as claimed in Claim 2, characterized in that said control signal is transmitted through the video channel.

4. A method as claimed in any one of Claims 1 to 3 in which the sound signal is altered by modulating the sound in the baseband by means of a modulating signal whose frequency is such that the modulated signal is located in the transmitted frequency band, characterized in that the control signal changes the frequency of the modulating signal among a plurality of predetermined frequencies.

5. A system for scrambling/descrambling sound, comprising a sound signal source, a transmitter using a transmission channel and receivers, with a device at the transmitter end which is capable of altering the sound signal in several ways so that an unadapted receiver reproduces an unintelligible sound, characterized in that the transmitter comprises:
   * comparison means for comparing the sound amplitude with a reference level,
   * means for checking the output signal of the comparison means during a given period, which means generate a control signal transmitted through the transmission channel and also applied to a processor which determines a digital control value indicating in which way the sound signal must be altered, and
   * means which delay the sound signal in the transmission channel with respect to said control signal and/or a muting device which is capable of cutting off the sound on command during a short period immediately after the appearance of the control signal.

6. A system as claimed in Claim 5 in which the device which is capable of altering the sound signal is a modulation device comprising a modulating signal generator having such a frequency that the modulated signal is located in the band of transmitted frequencies, characterized in that the modulating signal generator is programmable in frequency and in that the control value from the processor is a control value of the frequency of the modulating signal generator.

7. A system as claimed in Claim 6, characterized in that the modulating signal generator is a phase-locked loop oscillator and in that the control value from the processor is a digital value which programs a divider of the generator.

8. A system as claimed in any one of Claim 6 or 7 provided with low-pass filters for the sound, which filters are arranged before and/or after the modulation device, characterized in that said filters have a cut-off frequency which is programmable by means of a control value calculated by the processor in conformity with the control value of the frequency of the generator.

9. A system as claimed in any one of Claims 5 to 8, characterized in that each receiver includes a descrambling device comprising a sound signal modulator and a modulating signal generator, in that the modulating signal generator is programmable in frequency and in that each receiver comprises means for detecting the control signal and a processor for calculating, under the control of the control signal, a signal for determining the frequency of the modulating signal generator.

10. A system as claimed in Claim 9, provided with low-pass filters for the sound, characterized in that said low-pass filters are of a type having an adjustable cut-off and/or rejection frequency and in that the processor provides, under the control of the control signal, a signal for determining the cut-off and/or rejection frequency.

**Patentansprüche**

1. Verfahren zum Verschlüsseln eines einem Übertragungskanal zugeführten Tonsignals indem mehrere Moden zur Änderung des Tonsignals vorgesehen werden, wobei der Übergang von dem einen Modus auf den anderen durch ein Steuersignal erfolgt, dadurch gekennzeichnet, daß
   - Perioden detektiert werden, in denen die Tonsignalamplitude während einer vorbestimmten Dauer immer unter einem Bezugswert bleibt,
   - wenn eine solche Periode detektiert wird, das Steuersignal erzeugt wird,
   - der Ton mit Verzögerung gegenüber dem ursprünglich zugeführten Ton und dem Steuersignal gesendet wird und/oder der Ton während einer kurzen Periode, welche die genannte Periode verlängert, unterbrochen wird.

2. Verfahren nach Anspruch 1, angewandt in einem Fernsehübertragungskanal, dadurch gekennzeichnet, daß einmal je Teilbild die Suche nach den genannten Perioden durchgeführt wird.

3. Verfahren nach Anspruch 2, dadurch gekennzeichnet, daß das genannte Steuersignal über den Video-Weg übertragen wird.

4. Verfahren nach einem der Ansprüche 1 bis 3, wobei das Tonsignal durch Modulation des Tones in dem Basisband durch ein Modulationssignal, dessen Frequenz derart ist, daB das modulierte Signal in dem übertragenen Frequenzband liegt, geändert wird, dadurch gekennzeichnet, daß das Steuersignal eine Änderung der Frequenz des Modulationssignals, das aus einer Vielzahl vorgegebener Frequenzen gewählt ist.

5. System zum Verschlüsseln / Entschlüsseln eines Tonsignals mit insbesondere einer Tonsignalquelle, einem eine Übertragungsstrecke benutzenden Sender, und mit Empfängern, wobei im Sender eine Anordnung vorgesehen ist zum verschiedenartigen Ändern des Tonsignals, und zwar derart, daß ein nicht angepaßter Empfänger einen unverständlichen Ton wiedergibt, dadurch gekennzeichnet, daß der Sender die nachfolgenden Elemente aufweist:
   * Vergleichsmittel zum Vergleichen der Amplitude des Tones mit einem Bezugspegel,
   * Mittel zum Überprüfen des Ausgangssignals der Vergleichsmittel während einer bestimmten Periode, wobei diese Mittel ein Steuersignal erzeugen, das über die Übertragungsstrecke gesendet und ebenfalls einem Prozessor zugeführt wird, der einen digitalen Steuerwert bestimmt, der angibt, auf welche Art und Weise das Tonsignal geändert werden soll, und
   * Mittel, die das Tonsignal in der Übertragungsstrecke gegenüber dem genannten Steuersignal verzögern und/oder mit einer Stummschaltung, wodurch es möglich ist, per Befehl den Ton während einer kurzen Dauer unmittelbar nach dem Erscheinen des Steuersignals zu unterbrechen.

6. System nach Anspruch 5, bei dem die Einrichtung zum Ändern des Tonsignals eine Modulationsanordnung mit einem Signalgenerator ist, der mit einer derartigen Frequenz moduliert, daß das modulierte Signal in dem Band der übertragenen Frequenzen liegt, dadurch gekennzeichnet, daß Generator des Modulationssignals in der Frequenz programmierbar ist und daß der von dem Prozessor gelieferte Steuerwert ist ein Steuerwert der Frequenz des Modulationssignalgenerators ist.

7. System nach Anspruch 6, dadurch gekennzeichnet, daß der Modulationssignalgenerator ein Oszillator mit einer Phasenverriegelungsschleife ist und daß der von dem Prozessor gelieferte Steuerwert ein digitaler Wert ist, der einen Teiler des Generators programmiert.

8. System nach einem der Ansprüche 6 oder 7 mit Tiefpaßfiltern für den Ton, die vor und/oder nach der Modulationsanordnung vorgesehen sind, dadurch gekennzeichnet, daß diese Filter in ihrer Grenzfrequenz programmierbar sind, und zwar durch einen von dem Prozessor entsprechend dem Steuerwert der Frequenz des Generators berechneten Steuerwert.

9. System nach einem der Ansprüche 5 bis 8, dadurch gekennzeichnet, daß jeder Empfänger eine Entschlüsselungsanordnung aufweist mit einem Tonsignalgenerator und einem Modulationssignalgenerator, daß der Modulationssignalgenerator in der Frequenz programmierbar ist und daß jeder Empfänger Steuersignaldetektionsmittel aufweist, sowie einen Prozessor um unter Ansteuerung des Steuersignals ein Signal zur Ermittlung der Frequenz des Modulationssignalgenerators zu berechnen.

10. System nach Anspruch 9 mit Tiefpaßfiltern für das Tonsignal, dadurch gekennzeichnet, daß diese Tiefpaßfilter von einem Typ sind mit einer regelbaren Abschneide- und/oder Grenzfrequenz und daß der Prozessor unter Ansteuerung des Steuersignals ein Signal zur Ermittlung der Abschneide- und/oder Grenzfrequenz erzeugt.

FIG.1

FIG.3

FIG.2